(19) **Europäisches Patentamt European Patent Office Office européen des brevets**

(11) **EP 3 715 628 B1**

(12) **EUROPEAN PATENT SPECIFICATION**

(45) Date of publication and mention of the grant of the patent:
**07.12.2022 Bulletin 2022/49**

(21) Application number: **18881100.4**

(22) Date of filing: **29.10.2018**

(51) International Patent Classification (IPC):
**F03D 13/40** *(2016.01)*     **F03D 13/10** *(2016.01)*
**B63B 35/00** *(2020.01)*     **B63B 35/44** *(2006.01)*
**B63B 75/00** *(2020.01)*

(52) Cooperative Patent Classification (CPC):
**F03D 13/40; B63B 35/00; B63B 35/003;**
**B63B 75/00; F03D 13/10;** B60P 3/40;
B63B 2035/446; Y02E 10/72; Y02E 10/727

(86) International application number:
**PCT/CN2018/112412**

(87) International publication number:
**WO 2019/100909 (31.05.2019 Gazette 2019/22)**

(54) **SYSTEM AND METHOD FOR LOADING AND TRANSPORTING OFFSHORE WIND TURBINES ON A SHIP**

SYSTEM UND VERFAHREN ZUM LADEN UND TRANSPORTIEREN VON OFFSHORE-WINDTURBINEN AUF EINEM SCHIFF

SYSTÈME ET PROCÉDÉ POUR EMBARQUER ET TRANSPORTER DES ÉOLIENNES OFFSHORE SUR UN VAISSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2017 CN 201711182468**

(43) Date of publication of application:
**30.09.2020 Bulletin 2020/40**

(73) Proprietor: **Wuhan University Of Technology Hongshan District Wuhan Hubei 430070 (CN)**

(72) Inventors:
• **ZHU, Ling Wuhan Hubei 430070 (CN)**
• **CHEN, Mingsheng Wuhan Hubei 430070 (CN)**
• **ZOU, Meiyan Wuhan Hubei 430070 (CN)**
• **WANG, Jiayue Wuhan Hubei 430070 (CN)**
• **DENG, Xu Wuhan Hubei 430070 (CN)**
• **DU, Huizi Wuhan Hubei 430070 (CN)**
• **CHEN, Tianxi Wuhan Hubei 430070 (CN)**
• **YU, Jinheng Wuhan Hubei 430070 (CN)**

(74) Representative: **Laufhütte, Dieter Lorenz Seidler Gossel Rechtsanwälte Patentanwälte Partnerschaft mbB Widenmayerstraße 23 80538 München (DE)**

(56) References cited:
**CN-A- 101 016 806     CN-A- 102 030 291**
**CN-A- 102 079 476     CN-A- 103 015 445**

**(Cont. next page)**

CN-A- 108 019 321     CN-U- 201 941 784
CN-U- 204 279 207     CN-U- 205 312 194
JP-B2- 5 189 050      KR-A- 20160 121 201
US-A1- 2013 243 559   US-A1- 2014 310 958

## Description

### Field

The invention relates to the technical field of offshore wind turbine installation, in particular to an integrated horizontal preassembling and loading-out system and method for offshore wind turbines.

### Background

At present, there are mainly two preassembling and loading-out methods for offshore wind turbines. One method is to adopt a wind turbine installation vessel suitable for modular lift installations. It mainly uses either an on-board or an on-shore crane to lift various wind turbine modules from the yard to the vessel deck and to place the modules in a predetermined manner. The lifting steps are complicated and the accuracy of the hoisting technology is highly required. The other method is to adopt a wind turbine installation vessel suitable for the installation of the integrated wind turbines. It is a preassembling and loading-out method that mainly uses an offshore dock or a landsite area to implement the vertical assembly of a wind turbine which is then moved to the front edge of the dock, and is lifted by an on-shore crane from the land onto a wind turbine installation vessel or a transport vessel. The wind turbine assembly by this method is carried out with high elevation. Therefore, the assembly is difficult; the energy consumption is increased; the transport is difficult and the efficiency is low.

In summary, in the traditional preassembling and loading-out methods for wind turbines, the manner of modular lift installation, and the manner of vertical preassembling and single lift of the integrated wind turbine onto the vessel deck are adopted, so that the difficulties associated with lift operation are great, and the vertical assembly on the land is also difficult. US 2014/310958 A1 discloses a wind power generation system which includes a rotor with a hub and blades, a nacelle for accommodating therein at least a generator connected to the rotor via a main shaft connected to the hub, and a tower supporting the nacelle on a top portion thereof, and having an opposite side thereof to the top portion fixed to a foundation, the tower including separated tower parts. When assembling the wind power generation system, the nacelle and the tower are laterally assembled together by using a carriage, and the rotor is fixed to the laterallyfacing nacelle.

KR 2016 0121201 A discloses a wind turbine installation vessel comprising a hull, a groove portion having a shape receding from a side of the hull to an inner side to receive a maritime foundation unit pre-installed at sea, a hull fixing unit fixating the hull to the maritime foundation unit around the groove unit, and a pillar positioning unit positioning a pillar of a wind turbine assembly loaded on the hull on an exact place of the maritime foundation unit.

### Summary

The technical problem to be solved by the present invention is to solve the aforementioned shortcomings associated with the traditional preassembling and loading-out method for offshore wind turbines, by providing an integrated horizontal preassembling and loading-out system and method for offshore wind turbines. By this invention, the self-propelled modular transporters (SPMT) at a dock are used to implement the butting of different sections of a wind turbine and to load-out the integrated wind turbine onto the installation vessel deck. Therefore, the difficulty and risk associated with the preassembling and loading-out of the wind turbine can be reduced; the efficiency of preassembling and loading-out can be improved; and the energy consumption can be lowered.

To solve the aforementioned technical problem, the present invention adopts the following technical solutions.

An integrated horizontal preassembling and loading-out system for offshore wind turbines comprises a plurality of self-propelled modular transporters disposed at a yard, a wind turbine installation vessel, and lifting devices installed on the wind turbine installation vessel, wherein

the self-propelled modular transporters comprise tower transporters and a nacelle transporter. The tower transporters comprise lower tower transporters, a middle tower transporter and an upper tower transporter for mounting a lower tower, a middle tower and an upper tower of a wind turbine, respectively. The nacelle transporter is used for mounting a nacelle of the wind turbine. Each self-propelled modular transporter comprises a frame and an installation seat installed on the frame; different sections of the wind turbine are mounted on the installation seats of the corresponding transporters; and the lower tower transporters, the middle tower transporter, the upper tower transporter and the nacelle transporter move along the same horizontal axis to implement horizontal butting and assembly of the various sections of the wind turbine, wherein the self-propelled modular transporters are configured to implement a load-out process of the integrated wind turbine from yard onto the wind turbine installation vessel; and and
the lifting devices on the vessel deck are configured to complete a loading-out process of wind turbines from the self-propelled modular transporters, wherein the lifting devices comprise supporting legs and wind turbine lifters, wherein the supporting legs are vertically mounted on the deck of the wind turbine installation vessel, each supporting leg is provided with the first rail in the vertical direction and a number of wind turbine lifters, the wind turbine lifters are in fit with the first rail and are capable of moving up and down along the first rail, the wind turbine lifters comprise sliders and cantilever beams, driving devices are arranged inside the sliders to drive the sliders to move up and down along the first rail, the cantilever beams are fixedly connected to the sliders, and fixing clamps are mounted at the end parts of the cantilever beams and are used for holding the wind turbine.

In the aforementioned solution, vertical hydraulic rods are installed on the self-propelled modular transporters, the lower ends of the vertical hydraulic rods are connected with the frames, and the upper ends of the vertical hydraulic rods are connected with the bottoms of the installation seats.

In the aforementioned solution, the lifting devices are symmetrically arranged on portside and starboard of the wind turbine installation vessel with every two lifting devices forming one group; and the turbine installation vessel is provided with a plurality of groups of lifting devices in the length direction of the vessel.

In the aforementioned solution, the first rail is the type of rack rail; the inner sides of the sliders are provided with gears, and the outer sides of the sliders are provided with the cantilever beams; the gears are engaged with the rack rails; and the driving devices inside the sliders drive the gears to move up and down along the first rail.

In the aforementioned solution, the supporting legs are provided with vertical dovetail joints, the vertical dovetail joints are in the shape of arc blocks, and the two side faces of each vertical dovetail joint are provided with vertical racks together forming the corresponding first rail.

In the aforementioned solution, inner side faces of the sliders are concave arc surfaces and are matched with outer arc surfaces of the dovetail joints; two columns of gears are arranged on the inner side face of each slider with each column comprising at least one gear, and are respectively engaged with the racks on the two side faces of the corresponding dovetail joint; and the driving devices inside the sliders drive the gears to rotate on the racks so as to drive the entire wind turbine lifters to move up and down on the supporting legs.

In the aforementioned solution, a plurality of wind turbine lifters are arranged on each supporting leg; rotary storage devices are installed at the top and bottom ends of each supporting leg; the rotary storage devices on each supporting leg are arranged coaxial with the supporting leg and capable of rotating around the central axis; each rotary storage device is provided with a plurality of second rails in the circumferential direction, the number of the second rails is equal to the number of the wind turbine lifters, and the second rails have the same structure as the first rails and are capable of butting with the first rails; and the wind turbine lifters are capable of moving on the second rails.

In the aforementioned solution, each rotary storage device is uniformly provided with dovetail joints of which the number is equal to the number of the wind turbine lifters in the circumferential direction, two side faces of each dovetail joint is provided with vertical racks which together form the corresponding second rail.

In the aforementioned solution, the rotary storage devices at the bottom ends of the supporting legs are located below the deck of the wind turbine installation vessel, and the joint between the deck and each supporting leg is provided with a deck opening.

In the aforementioned solution, the fixing clamps are arc-shaped, and non-slip pads are mounted on inner surfaces of the fixing clamps.

In the aforementioned solution, propellers are installed on the cantilever beams, are located between the sliders and the fixing clamps, and are capable of pushing the fixing clamps to move in the horizontal direction.

In the aforementioned solution, the lifting devices further comprise sleeves sleeving peripheries of the supporting legs, one sides of the sleeves are provided with vertical openings, the cantilever beams of the wind turbine lifters protrude from the vertical openings of the sleeves, and the sleeves are used for reinforcing and protecting the supporting legs.

In the aforementioned solution, a ballast water adjustment system is arranged in the wind turbine installation vessel.

In the aforementioned solution, the bow of the wind turbine installation vessel is connected to the dock through a springboard.

The present invention further provides an integrated horizontal preassembling and loading-out method for offshore wind turbines, wherein the method adopts the aforementioned loading-out system and is executed according to the following steps:

Step 1: performing horizontal assembly of the different sections of a wind turbine through horizontal relative movement of the self-propelled modular transporters, wherein one of the transporters stays in situ, and the other transporters move relative to each other along the same horizontal axis to implement butting and assembly of the different sections of the wind turbine;

Step 2: the self-propelled modular transporters loaded with the integrated wind turbine traveling smoothly at a low speed to implement a loading-out process of the integrated wind turbine from the yard onto the wind turbine installation vessel;

Step 3: after complete the loading-out operation, the transporters traveling to the lifting position, the wind turbine lifters of the lifting devices ascending to the same height as the self-propelled modular transporters, the fixing clamps holding the integrated wind turbine and ascending to a designated position, thus completing the loading-out process of one wind turbine, and then the self-propelled modular transporters leave the deck and move back to the yard; and

Step 4, several wind turbines loaded-out onto the vessel successively in the same way as described above to complete the loading-out process for one route of the installation vessel.

The present invention has the following beneficial effects:

1. The assembly process is simple and the assembly efficiency is high.

The self-propelled modular transporters carrying the various sections of a wind turbine move horizontally, so that the wind turbine maintains a horizontal state to accomplish the assembly of the wind turbine, which achieves higher efficiency as compared with the traditional vertical assembly of wind turbine tower sections by using the lift method.

2. Horizontal assembly ensures strong artificial adjustment and control ability, and more accurate assembly.

The self-propelled modular transporters are used to perform assembly of the different sections of the wind turbine within a height range of no more than two meters, so that the ability of artificial adjustment is strengthened, problems in the assembly can be found and corrected in time, the influence of high-altitude sea wind on the assembly is avoided, and the integrity and reliability of the wind turbine are ensured.

3. The self-propelled modular transporters carry the preassembled wind turbine for loading-out onto the vessel deck, which reduces energy consumption.

By the combined use of a plurality of self-propelled modular transporters, the transporters can carry the assembled wind turbine, and directly transport the wind turbine from the dock to a predetermined position on the wind turbine installation vessel deck through the springboard for connecting the bow with the dock, to avoid energy consumption due to working against gravity during the lifting operation.

4. The unique design of the lifting devices on the vessel increases the intelligence of placement of the wind turbine.

After the transporters carrying the wind turbines as a whole stay at the predetermined position, corresponding deck opening covers are opened, and the four groups of wind turbine lifters that are placed below the deck in advance ascend slowly along the first rails for lifting the wind turbines successively to the specified placement height, to achieve good intelligent control.

5. Time and cost are greatly reduced.

Traditional assembly is implemented by cranes and needs to do work by overcoming the gravity, while the present invention uses the modular transporters and only needs to do work by overcoming the ground friction force, thus greatly reducing the energy consumption.

**Brief Description of the Drawings**

The present invention will be further described in conjunction with the accompanying drawings and embodiments. In the drawings:

Fig. 1 is a structural schematic diagram of a self-propelled modular transporter in the present invention;
Fig. 2 is a schematic diagram of an integrated structure of a wind turbine in the present invention;
Fig. 3 is a schematic diagram of a movement process of self-propelled modular transporters when sections of the wind turbine of the present invention are horizontally preassembled at a dock;
Fig. 4 is a schematic diagram of a placement state of the entire wind turbine of the present invention on the self-propelled modular transporters;
Fig. 5 is a structural schematic diagram of a wind turbine installation vessel and a wind turbine lifting system in the present invention;
Fig. 6 is a structural schematic diagram of a lifting device on the wind turbine installation vessel shown in Fig. 5;
Fig. 7 is a structural schematic diagram of a supporting leg and rotary storage devices of the lifting device shown in Fig. 6;
Fig. 8 is an enlarged view at the position A of the lifting device shown in Fig. 7;
Fig. 9 is a structural schematic diagram of a wind turbine lifter of the lifting device shown in Fig. 6; and

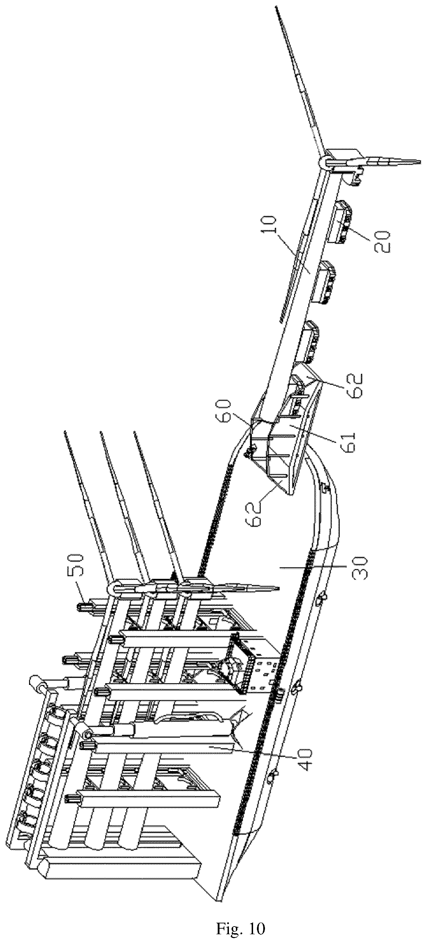

Fig. 10 is a schematic diagram of an integrated loading-out process of the self-propelled modular transporters carrying a wind turbine of the present invention.

Reference numerals: 10, wind turbine; 11, lower tower; 12, middle tower; 13, upper tower; 14, nacelle; 15, blade; 16, hub; 20, self-propelled modular transporter; 21, frame; 22, installation seat; 23, hydraulic rod; 24, tower transporter; 241, lower tower transporter; 242, middle tower transporter; 243, upper tower transporter; 25, nacelle transporter; 30, wind turbine installation vessel; 40, lifting device; 41, supporting leg; 411, first rail; 42, sleeve; 43, wind turbine lifter; 431, slider; 432, cantilever beam; 433, fixing clamp; 434, propeller; 435, gear; 50, rotary storage device; 51, second rail; 60, springboard; 61, main springboard; 62, tongue end plate; 70, dovetail joint.

**Detailed Description of the Embodiments**

To understand the technical features, objects and effects of the present invention more clearly, embodiments of the present invention will now be described in detail with reference to the accompanying drawings.

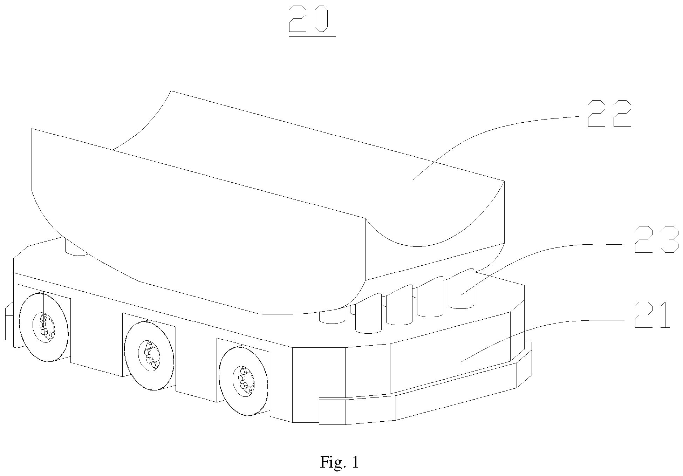

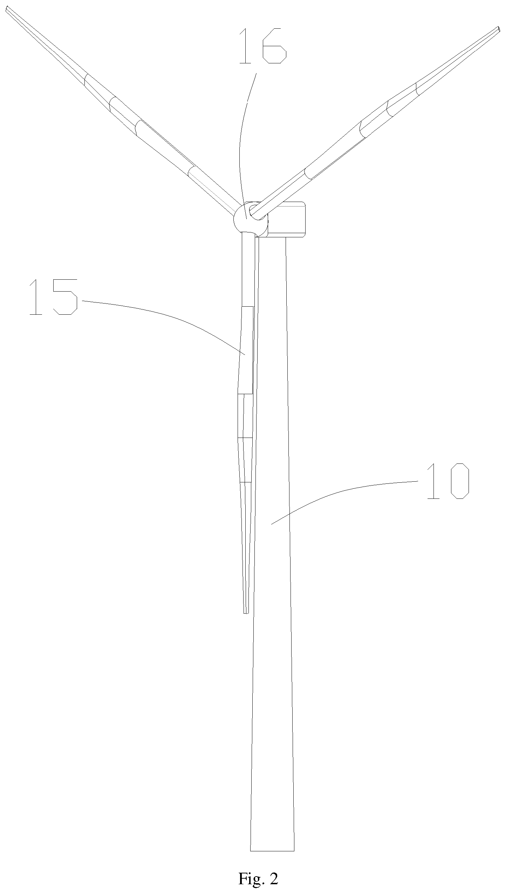

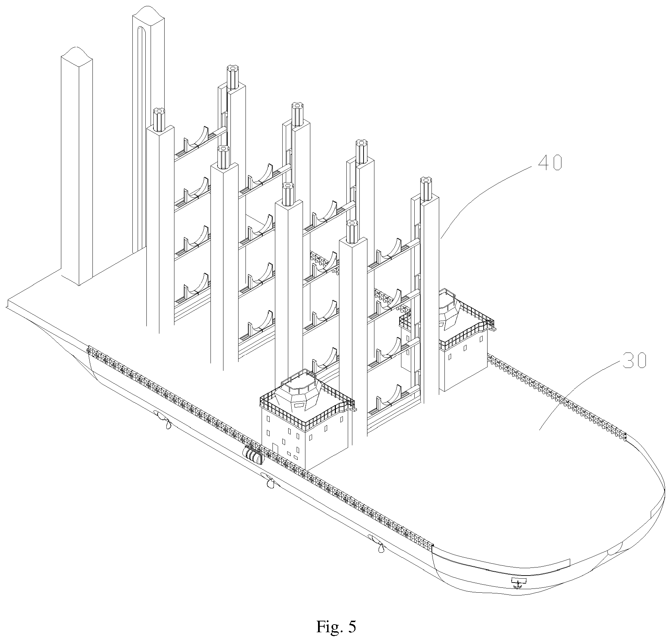

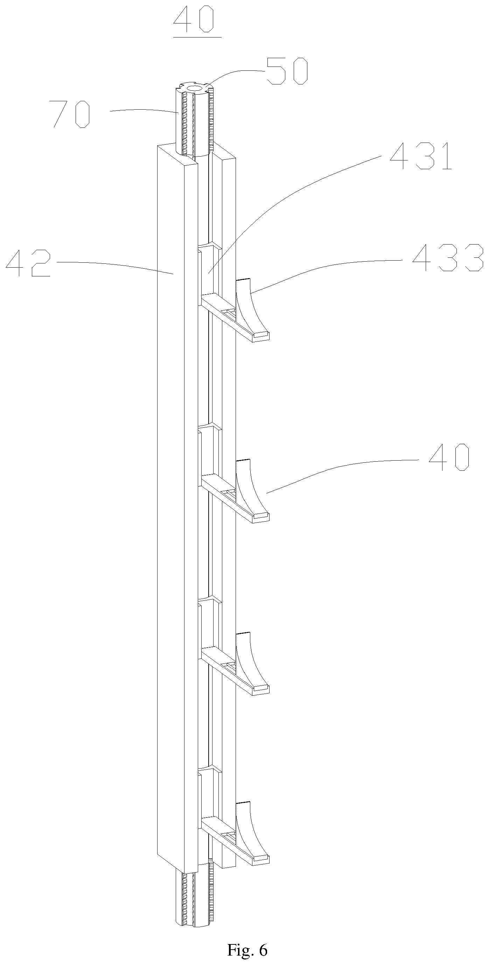

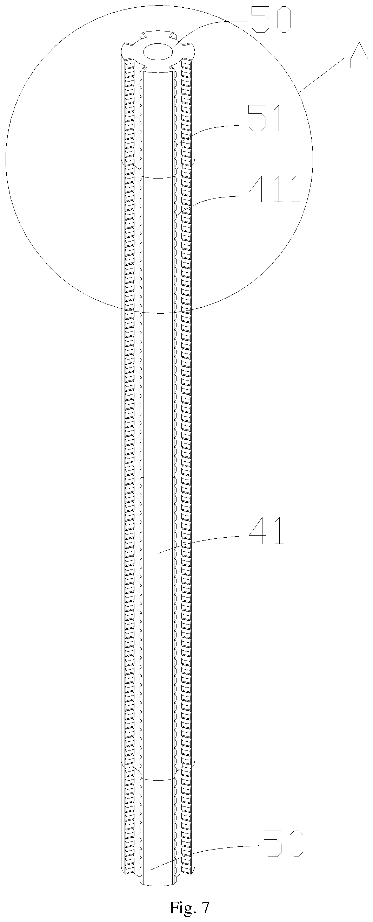

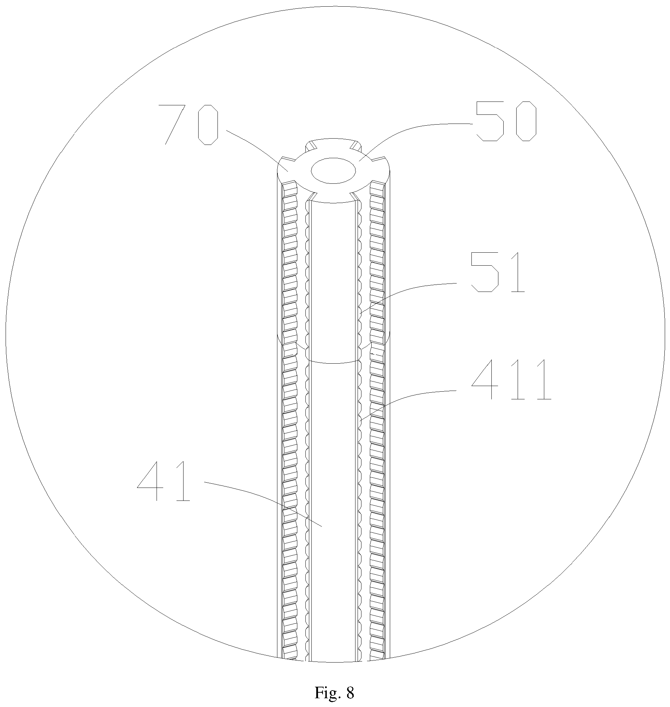

As shown in Figs. 1-9, an integrated horizontal preassembling and loading-out system for offshore wind turbines in a preferred embodiment of the present invention comprises a plurality of self-propelled modular transporters 20 disposed at a dock, a wind turbine installation vessel 30, and lifting devices 40 installed on the turbine installation vessel 30.

A wind turbine 10 before assembly generally comprises a lower tower 11, a middle tower 12, an upper tower 13 and a nacelle 14, as well as blades 15 and a hub 16. The self-propelled modular transporters 20 comprise four tower transporters 24 and one nacelle transporter 25. The tower transporters 24 comprise two lower tower transporters 241, one middle tower transporter 242 and one upper tower transporter 243. Each self-propelled modular transporter 20 comprises a frame 21 and an installation seat 22 mounted on the frame 21. The upper surfaces of the installation seats 22 are arc-shaped to facilitate placement of the towers of the wind turbine 10. Rubber non-slip pads are laid on the upper surfaces of the installation seats 22, and driving wheels are mounted under the frames 21. The lower tower 11, the middle tower 12, the upper tower 13 and the nacelle 14 of the wind turbine 10 are respectively horizontally installed on the installation seats 22 of the lower tower transporters 241, the middle tower transporter 242, the upper tower transporter 243 and the nacelle transporter 25. The lower tower transporters 241, the middle tower transporter 242, the upper tower transporter 243 and the nacelle transporter 25 move relative to one another along the same horizontal axis to implement butting and installation of sections of the wind turbine 10.

The wind turbine installation vessel 30 is stopped at the dock, and the prow of the wind turbine installation vessel 30 is connected to the dock through a springboard 60.

The lifting devices 40 comprise supporting legs 41 and wind turbine lifters 43, the supporting legs 41 are vertically mounted on the deck of the wind turbine installation vessel 30, the supporting legs 41 are provided with vertical first rails 411, the wind turbine lifters 43 are in fit with the first rails 411 and are capable of moving up and down along the first rails 411. The wind turbine lifters 43 comprise sliders 431 and cantilever beams 432, driving devices (not shown) are arranged inside the sliders 431 to drive the sliders 431 to move up and down along the first rails 411, the cantilever beams 432 are fixedly connected to the sliders 431, and fixing clamps 433 are mounted at the end parts of the cantilever beams 432, and are used for holding the wind turbine 10.

Further optimally, in the embodiment, a plurality of vertical hydraulic rods 23 are installed on each self-propelled modular transporter 20, and are symmetrically distributed in the front-rear direction of the self-propelled modular transporter 20, and the lower ends of the vertical hydraulic rods 23 are connected with the frames 21, and the upper ends of the vertical hydraulic rods 23 are connected with the bottoms of the installation seats 22 for adjusting the angles of sections of the wind turbine 10 during butting to ensure the accuracy and quality of butting.

Further optimally, in the embodiment, lifting devices 40 are symmetrically arranged on portside and starboard of the wind turbine installation vessel 30 with every two lifting devices together forming one group; and the wind turbine installation vessel 30 is provided with four groups of lifting devices 40 in the length direction of the vessel, and the four groups of lifting devices 40 together form a wind turbine lifting system to implement the arrangement and placement of the wind turbines on the vessel. When the wind turbine 10 is placed on the vessel, the axial direction of the wind turbine is consistent with the length direction of the vessel, and the lower tower 11 is close to the stern.

Further optimally, in the embodiment, the first rails 411 are rack rails; one sides of the sliders 431 are provided with gears 435, and the other sides of the sliders 431 are provided with the cantilever beams 432; and the gears 435 are engaged with the rack rails, and the gears 435 are connected to rotating shafts of the driving devices inside the sliders 431, so that the driving devices drive the gears 435 to rotate on the racks so as to drive the integrated wind turbine lifters 43 to perform lifting motion on the supporting legs 41, thereby lifting the integrated wind turbine 10 to a specified height.

Specifically, the supporting legs 41 are provided with vertical dovetail joints 70 which are in the shape of arc blocks; two side faces of each dovetail joint 70 are provided with vertical racks which together form the corresponding first rail 411. The inner side faces of the sliders 431 are concave arc surfaces and are matched with outer arc surfaces of the dovetail joints 70. Two columns of gears 435 are arranged on the inner side face of each slider 431 with each column comprising at least one gear, and the two columns of gears 435 are respectively engaged with the racks on the two side faces of the corresponding dovetail joint 70; and the driving devices inside the sliders 431 drive the gears 435 to rotate on the racks so as to drive the entire wind turbine lifters 43 to perform lifting motion on the supporting legs 41.

Further optimally, to improve the installation efficiency and save resources, a plurality of wind turbines 10 (usually 3-5 wind turbines) can be arranged on the wind turbine installation vessel 30. In the embodiment, using four wind turbines 10 as an example, four wind turbine lifters 43 are correspondingly arranged on each supporting leg 41. To achieve smooth arrangement and installation of the four wind turbines 10, rotary storage devices 50 are installed at top and bottom ends of the supporting legs 41 for storing idle wind turbine lifters 43. The rotary storage devices 50 on each supporting leg 41 are arranged coaxial with the supporting leg 41 and capable of rotating around the central axis; each rotary storage device 50 is provided with four second rails 51 in the circumferential direction (the number of the second rails 51 is equal to the number of the wind turbine lifters 43), and the second rails 51 have the same structure as the first rails 411 and are capable of butting with the first rails 411; and the wind turbine lifters 43 are capable of moving on the second rails 51.

Specifically, each rotary storage device 50 is uniformly provided with dovetail joints 70 of which the number is equal to the number of the wind turbine lifters 43 in the circumferential direction, and two side faces of each dovetail joint 70 are provided with vertical racks which together form the corresponding second rail 51. The dovetail joints 70 on the supporting legs 41 have the same structure and size as the dovetail joints 70 on the rotary storage devices 50, to facilitate butting of the first rails 411 and the second rails 51.

Before the loading-out operation of the wind turbines 10, four wind turbine lifters 43 of each lifting device 40 are respectively placed on four second rails 51 of the rotary storage device 50 at the bottom at an angle of 90 degrees with respect to each other. After the loading-out operation of the wind turbines 10, the four wind turbine lifters 43 of each lifting device rotate to working positions successively, and then ascend to the same height as the self-propelled modular transporters 20 to lift the four wind turbines 10 to appropriate positions. After an offshore installation process of a wind turbine 10 is completed, the four wind turbine lifters 43 of each lifting device successively ascend to the second rails 51 of the rotary storage device 50 on the top and rotate 90 degrees. After each 90-degree rotation, the second rails 51 are butted with and in fit with the first rails 411 so that the next wind turbine lifters 43 can climb to the second rails 51. After the offshore installation processes of the four wind turbines 10 are completed, all the four wind turbine lifters 43 of each lifting device are placed on the rotary storage device 50 on the top at an angle of 90 degrees with respect to each other.

Further optimally, in the embodiment, the rotary storage devices 50 at the bottom ends of the supporting legs 41 are located below the deck of the wind turbine installation vessel 30, and the joints of the deck and the supporting legs 41 are provided with deck openings. After the SPMTs loaded with a wind turbine 10 boarding the vessel, the deck openings are opened, and the wind turbine lifters 43 ascend to the same level as the wind turbine 10 on the SPMTs, and the fixing clamps 433 hold the wind turbine 10 and stably support the wind turbine 10. At that time, the entire weight of the wind turbine 10 is on the lifting devices 40, and the SPMTs can leave the vessel through the springboard 60, and then the wind turbine lifters 43 raise the wind turbine 10 to the designated position.

Further optimally, in the embodiment, the upper surface of a single fixing clamp 433 is in a 1/4 arc shape, and is provided with a non-slip pad. Two fixing clamps 433 in the same group of lifting devices 40 form a semi-circle which is open upward, and are respectively used for holding two sides of towers of the wind turbine 10.

Further optimally, in the embodiment, propellers 434 are installed on the cantilever beams 432, are located between the sliders 431 and the fixing clamps 433, and are capable of pushing the fixing clamps 433 to move in the horizontal direction, so as to adjust clamping force of the fixing clamps 433 for towers of the wind turbines and prevent shaking and displacement during transport.

The lifting devices 40 further comprise sleeves 42; the sleeves 42 sleeve the peripheries of the supporting legs 41; and one sides of the sleeves 42 are provided with vertical openings with U-shaped cross sections. The cantilever beams 432 of the wind turbine lifters 43 protrude from the vertical openings of the sleeve 42, and the sleeves 42 are used for reinforcing and protecting the supporting legs 41.

Further optimally, in the embodiment, a ballast water adjustment system is arranged in the wind turbine installation vessel 30, and is used for adjusting the draught and stability of the hull during the loading-out process of the wind turbine 10.

Further optimally, in the embodiment, the springboard 60 comprises a main springboard 61 and tongue end plates 62 hinged to two ends of the springboard 60 through hinges. The springboard 60 is matched with the self-propelled modular transporters 20 in structure, and the tongue end plates 62 are used for angle adjustment. A panel of the springboard 60 is provided with non-slip facilities of which the middle parts are mainly riffled plates. The springboard 60 and the hull are connected by an eye plate group, and adopt pin shaft transmission. Three pairs of eye plate groups are provided in consideration of shaft concentricity. To facilitate the self-propelled modular transporters 20 getting on/off the springboard 60, an arc-shaped board is arranged at a part, higher than the springboard 60, of the dock for connection.

The present invention also provides an integrated horizontal preassembling and loading-out method for offshore wind turbines. The method mainly comprises a process of assembly at the dock and an integrated transporting and loading-out-placement process. During the process assembly at the dock, butting and assembly of sections of the wind turbine are implemented by using the self-propelled modular transporters 20. During the preassembling and loading-out process, the vertical layered arrangement and placement of the wind turbines 10 on the vessel is achieved by the coordinated operation of the lifting devices 40 on the vessel. Specifically, the method comprises the following steps:

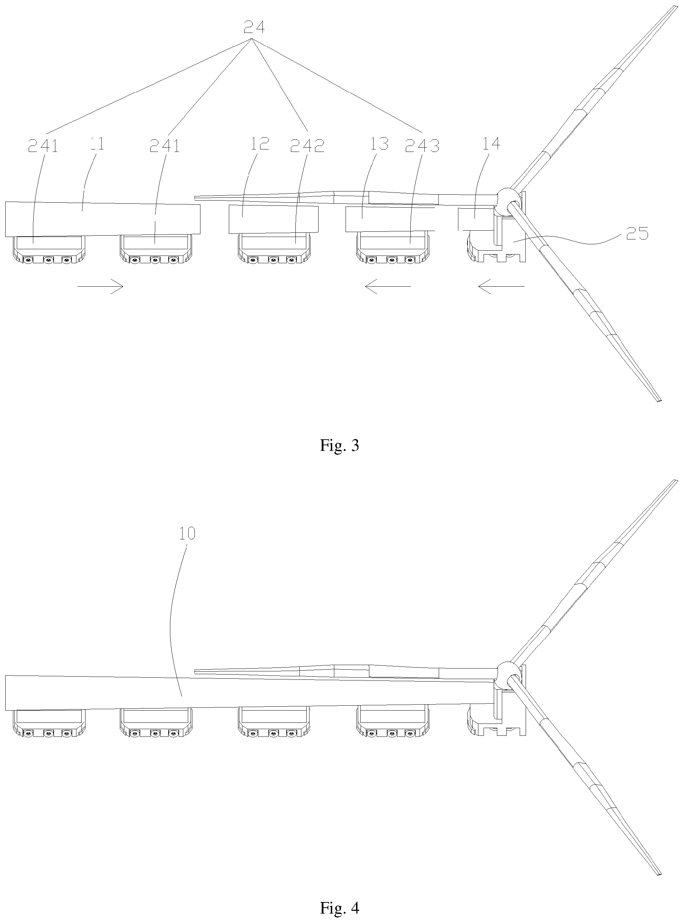

In Step 1, as shown in Figs. 3-4, horizontal assembly of the different sections of a wind turbine 10 is performed through horizontal movement of the self-propelled modular transporters 20, wherein the middle tower transporter 242 loaded with the middle tower 12 stays in situ, the upper tower transporter 243 loaded with the upper tower 13 does horizontal motion to the left so that the upper tower 13 is butted with the middle tower 12, the nacelle transporter 25 loaded with the nacelle 14 does horizontal motion to the left so that nacelle 14 is butted with the upper tower 13, and the lower tower transporter 241 loaded with the lower tower 11 does horizontal motion to the right so that the lower tower 11 is butted with the middle tower 12; and during the motion butting process, the transporters do low-speed linear motion all the time, and butting surfaces are flush with each other in height, and the butting angle is adjusted by adjusting the up-and-down motion of the hydraulic rods 23 on the transporters to ensure accuracy and quality of butting.

In Step 2, the self-propelled modular transporters 20 loaded with the integrated wind turbine 10 travel smoothly at a low speed, and the springboard 60 is used to achieve connection between the dock and the hull, thereby implementing a loading-out process of the integrated wind turbine 10 from the yard onto the wind turbine installation vessel; and in the loading-out process, the ballast water adjustment system on the wind turbine installation vessel 30 is used to adjust the draught and stability of the vessel to ensure that the wind turbine is smoothly loaded out onto the vessel.

In Step 3, after complete the loading-out operation, the transporters travel to a lifting position, cover plates at the deck opening are opened, the wind turbine lifters 43 of the four groups of lifting devices 40 ascend from positions below the deck to the same height as the self-propelled modular transporters 20, the fixing clamps 433 hold the integrated wind turbine 10 and ascend to a designated position, thus completing the loading-out process of one wind turbine 10, and then the self-propelled modular transporters 20 leave the deck and move back to the yard.

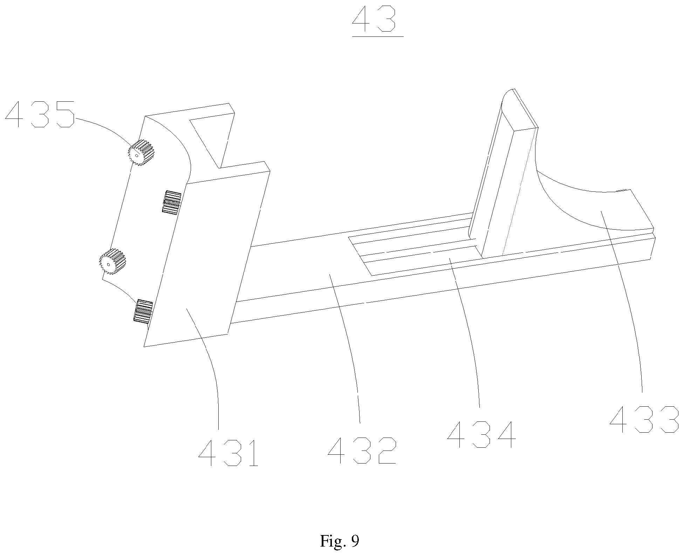

In Step 4, as shown in Fig. 9, several wind turbines 10 are loaded-out onto the vessel successively in the same way as described above to complete the loading-out process for one route of the installation vessel.

It should be noted that during the section assembly and integrated loading loading-out, the blades 15 of the wind turbine are fixed, wherein one blade is parallel to the towers, and the tip of the blade points to the bottom ends of the towers of the wind turbines.

The integrated horizontal preassembling and loading-out system and method for offshore wind turbines provided in the present invention are applicable to various types of wind turbine preassembling and loading-out processes, as long as the wind turbine is matched with the vessel type and the transporter type. The wind turbine 10 used in the embodiment is SL5000, in which the tower has a height of 70m and a weight of 366t; an impeller has a diameter of 128m and a blade weight of 24t; the nacelle has a length of 8m and a weight of 281t; the hub has a weight of 84t; a cut-in wind speed is 3m/s; and an average wind speed is 12m/s. The SPMT adopted here has a driving speed of 1-5km/h, an axle load between 30-50t, and an accuracy up to 2mm. The SPMT loading capacity can reach more than 50,000 tons in the case of mechanical assembly or free combination of multiple transporters. The length of the lower tower 11 of the wind turbine is 30m, and the length of the self-propelled modular transporter 20 is 10m. The lower tower 11 of the wind turbine is carried by two self-propelled modular transporters 20, and an assembly section of 1m in length is left at each of two ends of the lower tower. The middle tower 12 and the upper tower 13 are both 20m in length and are respectively carried by one self-propelled modular transporter 20, with assembly sections of 5m left respectively at two ends. The nacelle 14 is carried by the nacelle transporter 25. Horizontal assembly of the various sections of the wind turbine 10 is implemented through horizontal motion of the five self-propelled modular transporters 20.

Compared with the prior art, the present invention has the following technical effects:

1. The assembly process is simple and the assembly efficiency is high.

The self-propelled modular transporters 20 carrying the various sections of the wind turbine 10 do horizontal motion, so that the wind turbine 10 maintains a horizontal state to accomplish the assembly of the wind turbine 10. The time required for traditional assembly of wind turbine tower sections is about 12 hours, the time for assembling the blades and the hub is 4 hours, the time for assembling the nacelle 14 and the upper tower 13 is 4 hours, and the time for assembling the impeller and the nacelle 14 is 4 hours, totally requiring 24 hours. Whereas by using the transporters for assembly, it takes 6 hours for twice butting of the three tower sections, 3 hours for the installation and butting of the hub and three blades, 1 hour for the placement of the nacelle, 2 hours for the butting of the nacelle and the assembled hub, and 3 hours for butting of the assembled nacelle and the towers, totally requiring 15 hours. In this way, the efficiency is increased by 37.5% as compared with the technology of fixing and hoisting parts and components of the wind turbine 10.

2. Horizontal assembly ensures strong artificial adjustment and control ability, and more accurate assembly.

The self-propelled modular transporters 20 are used to perform assembly of the different sections of the wind turbine 10 within a height range of no more than two meters, so that the ability of artificial adjustment is strengthened, and problems in the assembly can be found and corrected in time, the influence of high-altitude sea wind on the assembly is avoided, and the integrity and reliability of the wind turbine 10 are ensured.

3. The self-propelled modular transporters 20 carry the preassembled wind turbine 10 for loading-out, which reduces energy consumption.

By the combined use of a plurality of self-propelled modular transporters 20, the transporters carry the assembled wind turbine 10, and transport the wind turbine 10 to a predetermined position of the wind turbine installation vessel 30 directly at the dock through the springboard 60 connecting for the prow with the dock, to avoid energy consumption due to doing work by overcoming the gravity during hoisting.

4. The unique design of the lifting devices 40 on the vessel increases the intelligence of placement of the wind turbine 10.

After the transporters carrying the wind turbines 10 as a whole are stopped at the predetermined position, corresponding deck opening covers are opened, and the four groups of wind turbine lifters 43 that are placed below the deck in advance ascend slowly along the first rails 411, and lift the wind turbines 10 successively to the specified placement height, to achieve good intelligent control.

5. In preassembling of the wind turbine at the dock, time and cost are greatly reduced.

Traditional assembly is implemented by hoisting and needs to do work by overcoming the gravity, the amount of work is as follows:

$$W = G_1 h_1 + G_2 h_2 + G_3 h_3 + G_4 h_4$$
$$= 1040000 \times 40 + 1040000 \times 60 + 2810000 \times 70 + 1560000 \times 70$$
$$= 409900000 \text{W} = 409900 \text{KW}$$

In the formula:

$G_1$ : gravity of the middle tower (N); $h_1$ : lifting height of the middle tower (m);
$G_2$ : gravity of upper tower (N); $h_2$ : lifting height of upper tower (m);
$G_3$ : gravity of the nacelle (N): $h_3$: lifting height of the nacelle (m);
$G_4$ : gravity of the impeller (N); $h_4$ : lifting height of the impeller (m).

The present invention uses the modular transporters and only needs to do work by overcoming the ground friction force, the amount of work is as follows:

$$W' = \mu G S_{combined} = 0.5 \times 7570000 \times 10 = 37850000 \text{W} = 37850 \text{KW}$$

In the formula:

$\mu$ : coefficient of friction between the tire and ground; $S_{combined}$: travel distance (m) of the transporter;
$W$: the amount of work in traditional preassembling at the dock (KW); $W'$: the amount of work in preassembling at the dock in the present invention (KW).

It can be seen that the amount of work in the traditional preassembling is about 13 times the amount of work of the present invention.

The embodiments in the specification are described in a progressive manner. Each embodiment focuses on differences from other embodiments. For the same and similar parts between the embodiments, refer can be made to each other.

The embodiments of the present invention are described above in conjunction with the accompanying drawings, but the present invention is not limited to the specific implementations described above. The foregoing specific implementations are only schematic and not restrictive. Under the enlightenment of the present invention, those of ordinary skill in the art can also make many forms without departing from the protection scope of the claims.

**Claims**

1. An integrated horizontal preassembling and loading-out system for offshore wind turbines (10), comprising a plurality of self-propelled modular transporters (20) disposed at a yard, a wind turbine installation vessel (30), and lifting devices (40) installed on the turbine installation vessel (30), wherein

the self-propelled modular transporters (20) comprise tower transporters (24) and a nacelle transporter (25), the tower transporters (24) comprise lower tower transporters (241), a middle tower transporter (242) and an upper tower transporter (243) for mounting a lower tower (11), a middle tower (12) and an upper tower (13) of a wind turbine (10), respectively, and the nacelle transporter (25) is used for mounting a nacelle (14) of the wind turbine (10); each self-propelled modular transporter (20) comprises a frame (21) and an installation seat (22) installed on the frame (21), sections of a wind turbine (10) are respectively mounted on the installation seats (22) of the corresponding transporters (24, 25); and the lower tower transporters (241), the middle tower transporter (242), the upper tower transporter (243) and the nacelle transporter (25) are configured to move along the same horizontal axis to implement horizontal butting and assembly of all sections of a wind turbine (10), wherein the self-propelled modular transporters (20) are
configured to implement a
load-out process of the integrated wind turbine (10) from yard onto the wind turbine installation vessel (30); and the lifting devices (40) are configured to complete a loading-out process of wind turbines (10) from the self-propelled modular transporters (20), wherein the lifting devices (40) comprise supporting legs (41) and wind turbine lifters (43), wherein the supporting legs (41) are vertically mounted on the deck of the wind turbine installation vessel (30), the supporting legs (41) are provided with vertical first rails (411), the wind turbine lifters (43) are in fit with the first rails (411) and are capable of moving up and down along the first rails (411), the wind turbine lifters (43) comprise sliders (431) and cantilever beams (432), driving devices are arranged inside the sliders (431) to drive the sliders (431) to move up and down along the first rails (411), the cantilever beams (432) are fixedly connected to the sliders (431), and fixing clamps (433) are mounted at the end parts of the cantilever beams (432) and are configured to hold the wind turbine (10).

2. The integrated horizontal preassembling and loading-out system for offshore wind turbines (10) according to claim 1, **characterized in that** vertical hydraulic rods are installed on the self-propelled modular transporters (20), and the lower ends of the vertical hydraulic rods (23) are connected with the frames (21), and the upper ends of the vertical hydraulic rods (23) are connected with the bottoms of the installation seats (22).

3. The integrated horizontal preassembling and loading-out system for offshore wind turbines (10) according to claim 1, **characterized in that** the lifting devices (40) are symmetrically arranged on port and starboard sides of the wind turbine installation vessel (30) with every two lifting devices (40) forming one group; and the turbine installation vessel (30 )is provided with a plurality of groups of lifting devices (40) in the length direction of the vessel (30).

4. The integrated horizontal preassembling and loading-out system for offshore wind turbines (10) according to claim 1, **characterized in that** the first rails (411) are rack rails; the inner sides of the sliders (431) are provided with gears (435), and the outer sides of the slider (431) are provided with the cantilever beams (432); the gears (435) are engaged with the rack rails (411); and the driving devices inside the sliders (431) drive the gears (435) to move up and down along the first rails. (411)

5. The integrated horizontal preassembling and loading-out system for offshore wind turbines (10) according to claim 4, **characterized in that** the supporting legs (41) are provided with vertical dovetail joints (70) which are in the shape of arc blocks, and two side faces of each dovetail joint (70) are provided with vertical racks which together form the corresponding first rail (411).

6. The integrated horizontal preassembling and loading-out system for offshore wind turbines (10) according to claim 5, **characterized in that** the inner side faces of the sliders (431) are concave arc surfaces and are matched with outer arc surfaces of the dovetail joints (70); the inner side face of each slider (431) is provided with two columns of gears (435) with each column at least comprising at least one gear (435), and the two columns of gears (435) on each slider (431) are respectively engaged with the racks on the two side faces of the corresponding dovetail joint (70); and the driving devices inside the sliders (431) drive the gears (435) to rotate on the racks so as to drive the entire corresponding wind turbine lifters (43) to perform lifting motion on the supporting legs (41).

7. The integrated horizontal preassembling and loading-out system for offshore wind turbines (10) according to claim 1, **characterized in that** a plurality of wind turbine lifters (43) are arranged in each lifting device (40); rotary storage devices (50) are installed at the top and bottom ends of each supporting leg (41), rotary storage devices (50) on each supporting leg (41) are arranged coaxial with the supporting leg (41) and capable of rotating around the central axis; each rotary storage device (50) is provided with a plurality of second rails (51) in the circumferential direction, the number of the second rails (51) is equal to the number of the wind turbine lifters (43), and the second rails have the same structure as the first rails and are capable of butting with the first rails; and the wind turbine lifters (43) are capable of moving on the second rails (51).

8. The integrated horizontal preassembling and loading-out system for offshore wind turbines (10) according to claim 7, **characterized in that** each rotary storage device (50) is uniformly provided with dovetail joints (70) of which the number is equal to the number of the wind turbine lifters (43) in the circumferential direction, two side faces of each dovetail joint (70) is provided with vertical racks which together form the corresponding second rail (51).

9. The integrated horizontal preassembling and loading-out system for offshore wind turbines (10) according to claim 7, **characterized in that** the rotary storage devices (50) at the bottom ends of the supporting legs (41) are located below the deck of the wind turbine installation vessel (30), and the joint of the deck and each supporting leg (41) is provided with a deck opening.

10. The integrated horizontal preassembling and loading-out system for offshore wind turbines (10) according to claim 1, **characterized in that** the fixing clamps (433) are arc-shaped, and non-slip pads are mounted on the inner surfaces of the fixing clamps (433).

11. The integrated horizontal preassembling and loading-out system for offshore wind turbines (10) according to claim 1, **characterized in that** propellers (434) are installed on the cantilever beams (432), are located between the sliders (431) and the fixing clamps (433), and are capable of pushing the fixing clamps (433) to move in the horizontal direction.

12. The integrated horizontal preassembling and loading-out system for offshore wind turbines (10) according to claim 1, **characterized in that** the lifting devices (40) further comprise sleeves (42) sleeving the peripheries of the supporting legs (41), one sides of the sleeves (42) are provided with vertical openings, the cantilever beams (432) of the wind turbine lifters (43) protrude from the vertical openings of the sleeves (42), and the sleeves (42) are used for reinforcing and protecting the supporting legs (41).

13. The integrated horizontal preassembling and loading-out system for offshore wind turbines (10) according to claim 1, **characterized in that** a ballast water adjustment system is arranged in the wind turbine installation vessel (30).

14. The integrated horizontal preassembling and loading-out system for offshore wind turbines (10) according to claim 1, **characterized in that** the prow of the wind turbine installation vessel (30) is connected to the dock through a springboard (60).

15. An integrated horizontal preassembling and loading-out method for offshore wind turbines (10), wherein the method adopts the loading-out system of any one of claims 1-14, and is executed according to the following steps:

Step 1: performing horizontal assembly of the different sections (11, 12, 13, 14) of a wind turbine (10) through horizontal relative movement of the self-propelled modular transporters (20), wherein one of the transporters stays in situ, and the other transporters move relative to each other along the same horizontal axis to implement butting and assembly of the different sections (11, 12, 13, 14) of the wind turbine (10);
Step 2: the self-propelled modular transporters (20) loaded with the integrated wind turbine (20) traveling smoothly at a low speed to implement a loading-out process of the integrated wind turbine (20) from the yard onto the wind turbine installation vessel (30);
Step 3: after complete the loading-out operation, the transporters (20) traveling to a lifting position, the wind turbine lifters (43) of the lifting devices (40) ascending to the same height as the self-propelled modular transporters (20), the fixing clamps (433) holding the integrated wind turbine (10) and ascending to a designated position, thus completing the loading-out process of one wind turbine (10), and then the self-propelled modular transporters (20) leave the deck and move back to the yard; and
Step 4, several wind turbines loaded-out onto the vessel successively in the same way as described above to complete the loading-out process for one route of the installation vessel (30).

**Patentansprüche**

1. Integriertes horizontales Vormontage- und Verladesystem für Offshore-Windturbinen (10), umfassend eine Vielzahl von selbstfahrenden modularen Transportern (20), die in einer Werft angeordnet sind, ein Windturbinen-Installationsschiff (30) und auf dem Windturbinen-Installationsschiff (30) installierte Hebevorrichtungen (40),

wobei die selbstfahrenden modularen Transporter (20) Turmtransporter (24) und einen Gondeltransporter (25) umfassen, und wobei die Turmtransporter (24) untere Turmtransporter (241), einen mittleren Turmtransporter (242) und einen oberen Turmtransporter (243) umfassen, die jeweils zur Montage eines unteren Turms (11), eines mittleren Turms (12) und eines oberen Turms (13) einer Windturbine (10) verwendet werden, und wobei der Gondeltransporter (25) zur Montage einer Gondel (14) der Windturbine (10) verwendet wird; und wobei jeder selbstfahrende modulare Transporter (20) einen Rahmen (21) und einen an dem Rahmen (21) installierten Installationssitz (22) umfasst, und wobei Abschnitte einer Windturbine (10) jeweils an den Installationssitzen (22) der entsprechenden Transporter (24, 25) montiert sind; und wobei die unteren Turmtransporter (241), der mittlere Turmtransporter (242), der obere Turmtransporter (243) und der Gondeltransporter (25) so konfiguriert sind, dass sie sich entlang derselben horizontalen Achse bewegen, um ein horizontales Aneinanderstoßen und Montieren aller Abschnitte einer Windturbine (10) zu implementieren, und wobei die selbstfahrenden modularen Transporter (20) so konfiguriert sind, dass sie einen Verladevorgang der integrierten Windturbine (10) von der Werft auf das Windturbinen-Installationsschiff (30) implementieren; und

wobei die Hebevorrichtungen (40) so konfiguriert sind, dass sie einen Verladevorgang von Windturbinen (10) von den selbstfahrenden modularen Transportern (20) vervollständigen, und wobei die Hebevorrichtungen (40) Stützbeine (41) und Windturbinenheber (43) umfassen, und wobei die Stützbeine (41) vertikal auf dem Deck des Windturbinen-Installationsschiffs (30) montiert sind, und wobei die Stützbeine (41) mit vertikalen ersten Schienen (411) versehen sind, und wobei die Windturbinenheber (43) mit den ersten Schienen (411) zusammenpassen und in der Lage sind, sich entlang der ersten Schienen (411) aufwärts und abwärts zu bewegen, und wobei die Windturbinenheber (43) Schieber (431) und freitragende Träger (432) umfassen, und wobei Antriebsvorrichtungen innerhalb der Schieber (431) angeordnet sind, um die Schieber (431) dazu anzutreiben, sich entlang den ersten Schienen (411) aufwärts und abwärts zu bewegen, und wobei die freitragenden Träger (432) fest mit den Schiebern (431) verbunden sind, und wobei Befestigungsklemmen (433) an den Endteilen der freitragenden Träger (432) montiert und so konfiguriert sind, dass sie die Windturbine (10) halten.

2. Integriertes horizontales Vormontage- und Verladesystem für Offshore-Windturbinen (10) nach Anspruch 1, **dadurch gekennzeichnet, dass** an den selbstfahrenden modularen Transportern (20) vertikale Hydraulikstangen installiert sind, wobei die unteren Enden der vertikalen Hydraulikstangen (23) mit den Rahmen (21) und die oberen Enden der vertikalen Hydraulikstangen (23) mit den Böden der Installationssitze (22) verbunden sind.

3. Integriertes horizontales Vormontage- und Verladesystem für Offshore-Windturbinen (10) nach Anspruch 1, **dadurch gekennzeichnet, dass** die Hebevorrichtungen (40) symmetrisch an Backbord- und Steuerbordseiten des Windturbinen-Installationsschiffs (30) angeordnet sind, wobei jeweils zwei Hebevorrichtungen (40) eine Gruppe bilden; und wobei das Windturbinen-Installationsschiff (30) mit einer Vielzahl von Gruppen von Hebevorrichtungen (40) in Längsrichtung des Windturbinen-Installationsschiff (30) versehen ist.

4. Integriertes horizontales Vormontage- und Verladesystem für Offshore-Windturbinen (10) nach Anspruch 1, **dadurch gekennzeichnet, dass** die ersten Schienen (411) Zahnstangenschienen sind; wobei die Innenseiten der Schieber (431) mit Zahnrädern (435) versehen sind und die Außenseiten der Schieber (431) mit den freitragenden Trägern (432) versehen sind; und wobei die Zahnräder (435) mit den Zahnstangenschienen (411) in Eingriff stehen; und wobei die Antriebsvorrichtungen innerhalb der Schieber (431) die Zahnräder (435) dazu antreiben, sich entlang den ersten Schienen (411) aufwärts und abwärts zu bewegen.

5. Integriertes horizontales Vormontage- und Verladesystem für Offshore-Windturbinen (10) nach Anspruch 4, **dadurch gekennzeichnet, dass** die Stützbeine (41) mit vertikalen Schwalbenschwanzverbindungen (70) versehen sind, die in Form von Bogenblöcken ausgebildet sind, und wobei zwei Seitenflächen jeder Schwalbenschwanzverbindung (70) mit vertikalen Zahnstangen versehen sind, die gemeinsam die entsprechende erste Schiene (411) bilden.

6. Integriertes horizontales Vormontage- und Verladesystem für Offshore-Windturbinen (10) nach Anspruch 5, **dadurch gekennzeichnet, dass** die inneren Seitenflächen der Schieber (431) konkave Bogenflächen sind und mit äußeren Bogenflächen der Schwalbenschwanzverbindungen (70) zusammenpassen; wobei die innere Seitenfläche jedes Schiebers (431) mit zwei Säulen von Zahnrädern (435) versehen ist, und wobei jede Säule mindestens ein Zahnrad (435) umfasst, und wobei die beiden Säulen von Zahnrädern (435) an jedem Schieber (431) jeweils mit den Zahnstangen an den beiden Seitenflächen der entsprechenden Schwalbenschwanzverbindung (70) in Eingriff stehen; und wobei die Antriebsvorrichtungen innerhalb der Schieber (431) die Zahnräder (435) dazu antreiben, sich an den Zahnstangen zu drehen, um die gesamten entsprechenden Windturbinenheber (43) dazu anzutreiben, eine Hubbewegung an den Stützbeinen (41) durchzuführen.

7. Integriertes horizontales Vormontage- und Verladesystem für Offshore-Windturbinen (10) nach Anspruch 1, **dadurch gekennzeichnet, dass** eine Vielzahl von Windturbinenhebern (43) in jeder Hebevorrichtung (40) angeordnet sind; wobei rotierende Speichervorrichtungen (50) an den oberen und unteren Enden jedes Stützbeins (41) installiert sind, und wobei die rotierenden Speichervorrichtungen (50) an jedem Stützbein (41) koaxial mit dem Stützbein (41) angeordnet und in der Lage sind, sich um die zentrale Achse zu drehen; und wobei jede rotierende Speichervorrichtung (50) mit einer Vielzahl von zweiten Schienen (51) in der Umfangsrichtung versehen ist, und wobei die Anzahl der zweiten Schienen (51) gleich der Anzahl der Windturbinenheber (43) ist, und wobei die zweiten Schienen die gleiche Struktur wie die ersten Schienen haben und in der Lage sind, mit den ersten Schienen zusammenzustoßen; und wobei die Windturbinenheber (43) in der Lage sind, sich auf den zweiten Schienen (51) zu bewegen.

8. Integriertes horizontales Vormontage- und Verladesystem für Offshore-Windturbinen (10) nach Anspruch 7, **dadurch gekennzeichnet, dass** jede rotierende Speichervorrichtung (50) gleichmäßig mit Schwalbenschwanzverbindungen (70) versehen ist, deren Anzahl gleich der Anzahl der Windturbinenheber (43) in Umfangsrichtung ist, und wobei zwei Seitenflächen jeder Schwalbenschwanzverbindung (70) mit vertikalen Zahnstangen versehen sind, die gemeinsam die entsprechende zweite Schiene (51) bilden.

9. Integriertes horizontales Vormontage- und Verladesystem für Offshore-Windturbinen (10) nach Anspruch 7, **dadurch gekennzeichnet, dass** die rotierende Speichervorrichtung (50) an den unteren Enden der Stützbeine (41) unterhalb des Decks des Windturbinen-Installationsschiffs (30) angeordnet sind, wobei die Verbindung zwischen dem Deck und jedem Stützbein (41) mit einer Decköffnung versehen ist.

10. Integriertes horizontales Vormontage- und Verladesystem für Offshore-Windturbinen (10) nach Anspruch 1, **dadurch gekennzeichnet, dass** die Befestigungsklemmen (433) bogenförmig sind, wobei an den Innenflächen der Befestigungsklemmen (433) rutschfeste Pads montiert sind.

11. Integriertes horizontales Vormontage- und Verladesystem für Offshore-Windturbinen (10) nach Anspruch 1, **dadurch gekennzeichnet, dass** Propeller (434) an den freitragenden Trägern (432) installiert sind, sich zwischen den Schiebern (431) und den Befestigungsklemmen (433) befinden und in der Lage sind, die Befestigungsklemmen (433) dazu zu schieben, sich in horizontaler Richtung zu bewegen.

12. Integriertes horizontales Vormontage- und Verladesystem für Offshore-Windturbinen (10) nach Anspruch 1, **dadurch gekennzeichnet, dass** die Hebevorrichtungen (40) weiterhin Hülsen (42) umfassen, die die Peripherie der Stützbeine (41) ummanteln, wobei eine Seite der Hülsen (42) mit vertikalen Öffnungen versehen ist, und wobei die freitragenden Träger (432) der Windturbinenheber (43) aus den vertikalen Öffnungen der Hülsen (42) herausragen, und wobei die Hülsen (42) zur Verstärkung und zum Schutz der Stützbeine (41) verwendet werden.

13. Integriertes horizontales Vormontage- und Verladesystem für Offshore-Windturbinen (10) nach Anspruch 1, **dadurch gekennzeichnet, dass** in dem Windturbinen-Installationsschiff (30) ein Ballastwasser-Einstellsystem angeordnet ist.

14. Integriertes horizontales Vormontage- und Verladesystem für Offshore-Windturbinen (10) nach Anspruch 1, **dadurch gekennzeichnet, dass** der Bug des Windturbinen-Installationsschiffs (30) über ein Sprungbrett (60) mit dem Dock verbunden ist.

15. Integriertes horizontales Vormontage- und Verladeverfahren für Offshore-Windturbinen (10), wobei das Verfahren das Verladesystem nach einem der Ansprüche 1 bis 14 verwendet und gemäß den folgenden Schritten ausgeführt wird:

Schritt 1: Durchführen einer horizontalen Montage der verschiedenen Abschnitte (11, 12, 13, 14) einer Windturbine (10) durch eine horizontale Relativbewegung der selbstfahrenden modularen Transporter (20), wobei einer der Transporter an Ort und Stelle bleibt und die anderen Transporter sich relativ zueinander entlang der gleichen horizontalen Achse bewegen, um das Aneinanderstoßen und die Montage der verschiedenen Abschnitte (11, 12, 13, 14) der Windturbine (10) zu implementieren;

Schritt 2: die selbstfahrenden modularen Transporter (20), die mit der integrierten Windturbine (10) beladen sind, bewegen sich gleichmäßig mit einer niedrigen Geschwindigkeit, um einen Verladevorgang der integrierten Windturbine (10) von der Werft auf das Windturbinen-Installationsschiff (30) zu implementieren;

Schritt 3: nach Vervollständigen des Verladevorgangs fahren die Transporter (20) zu einer Hebeposition, die Windturbinenheber (43) der Hebevorrichtungen (40) steigen auf die gleiche Höhe wie die selbstfahrenden modularen Transporter (20), die Befestigungsklemmen (433) halten die integrierte Windturbine (10) und steigen zu einer bestimmten Position auf, wodurch der Verladevorgang einer Windturbine (10) abgeschlossen wird, und dann verlassen die selbstfahrenden modularen Transporter (20) das Deck und bewegen sich zurück zur Werft; und

Schritt 4: mehrere Windturbinen werden nacheinander auf die gleiche Weise wie oben beschrieben auf das Schiff verladen, um den Verladevorgang für eine Route des Windturbinen-Installationsschiffs (30) zu vervollständigen.

**Revendications**

1. Système intégré de pré-assemblage et de déchargement horizontal pour éoliennes marines (10), comprenant une pluralité de transporteurs modulaires autopropulsés (20) disposés sur un site, un navire d'installation d'éolienne (30) et des dispositifs de levage (40) installés sur le navire d'installation d'éolienne (30), dans lequel,

les transporteurs modulaires autopropulsés (20) comprennent des transporteurs de tour (24) et un transporteur de nacelle (25), les transporteurs de tour (24) comprennent des transporteurs de tour inférieurs (241), un transporteur de tour médiane (242) et un transporteur de tour supérieur (243) pour monter respectivement une tour inférieure (11), une tour médiane (12) et une tour supérieure (13) d'une éolienne (10), et le transporteur de nacelle (25) est utilisé pour monter une nacelle (14) de l'éolienne (10) ; chaque transporteur modulaire autopropulsé (20) comprend un châssis (21) et un siège d'installation (22) installé sur le châssis (21), des sections d'une éolienne (10) sont respectivement disposées sur les sièges d'installation (22) des transporteurs correspondants (24, 25) ; et les transporteurs de tour inférieurs (241), le transporteur de tour médiane (242), le transporteur de tour supérieur (243) et le transporteur de nacelle (25) sont configurés pour se déplacer le long d'un même axe horizontal, afin de mettre en œuvre un aboutement horizontal et un assemblage de toutes les sections d'une éolienne (10), dans lequel les transporteurs modulaires autopropulsés (20) sont configurés pour mettre en œuvre un processus de déchargement de l'éolienne intégrée (10) depuis un site vers le navire d'installation d'éolienne (30) ; et

les dispositifs de levage (40) sont configurés pour effectuer un processus de déchargement d'éolienne (10) depuis les transporteurs modulaires autopropulsés (20), dans lequel les dispositifs de levage (40) comprennent des pieds de support (41) et des élévateurs d'éolienne (43), dans lequel les pieds de support (41) sont verticalement disposés sur un pont du navire d'installation d'éolienne (30), les pieds de support (41) sont pourvus de premiers rails verticaux (411), les élévateurs d'éolienne (43) s'adaptent aux premiers rails (411) et sont capables de monter et descendre le long des premiers rails (411), les élévateurs d'éoliennes (43) comprennent des coulisseaux (431) et des poutres en porte-à-faux (432), des dispositifs d'entraînement sont disposés à l'intérieur des coulisseaux (431) pour entraîner les coulisseaux (431) à monter et descendre le long des premiers rails (411), les poutres en porte-à-faux (432) sont reliées de manière fixe aux coulisseaux (431), et des pinces de fixation (433) sont disposées aux parties d'extrémité des poutres en porte-à-faux (432) et sont configurées pour maintenir l'éolienne (10).

2. Système intégré de pré-assemblage et de déchargement horizontal pour éoliennes marines (10) selon la revendication 1, **caractérisé en ce que**, des tiges hydrauliques verticales sont installées sur les transporteurs modulaires autopropulsés (20), et les extrémités inférieures des tiges hydrauliques verticales (23) sont reliées au châssis (21), et les extrémités supérieures des tiges hydrauliques verticales (23) sont reliées aux fonds des sièges d'installation (22).

3. Système intégré de pré-assemblage et de déchargement horizontal pour éoliennes marines (10) selon la revendication 1, **caractérisé en ce que** les dispositifs de levage (40) sont disposés de manière symétrique de part et d'autre du navire d'installation d'éolienne (30) avec tous les deux dispositifs de levage (40) formant un groupe ; et que le navire d'installation d'éolienne (30) est pourvu d'une pluralité de groupes de dispositifs de levage (40) dans une direction de la longueur du navire d'installation d'éolienne (30).

4. Système intégré de pré-assemblage et de déchargement horizontal pour éoliennes marines (10) selon la revendication 1, **caractérisé en ce que** les premiers rails (411) sont des rails à crémaillères ; les côtés internes des coulisseaux (431) sont pourvus d'engrenages (435), et les côtés externes des coulisseaux (431) sont pourvus de poutres en porte-à-faux (432) ; les engrenages (435) sont engagés avec les rails à crémaillères (411) ; et les dispositifs d'entraînement à l'intérieur des coulisseaux (431) entraînent les engrenages (435) à monter et descendre le long des premiers rails (411).

**5.** Système intégré de pré-assemblage et de déchargement horizontal pour éoliennes marines (10) selon la revendication 4, **caractérisé en ce que** les pieds de support (41) sont pourvus des connecteurs verticaux en queue d'aronde (70) qui sont en forme de bloc d'arc, et deux faces latérales de chaque connecteur en queue d'aronde (70) sont pourvues de crémaillères verticales qui forment ensemble le premier rail (411) correspondant.

**6.** Système intégré de pré-assemblage et de déchargement horizontal pour éoliennes marines (10) selon la revendication 5, **caractérisé en ce que** les faces latérales internes des coulisseaux (431) ont des surfaces concaves en arc correspondant aux surfaces externes en arc des connecteurs en queue d'aronde (70) ; la face latérale interne de chaque coulisseau (431) est pourvue de deux colonnes à engrenages (435), chaque colonne comprenant au moins un engrenage (435), et les deux colonnes à engrenages (435) sur chaque coulisseau (431) sont respectivement engagés avec les crémaillères sur les deux faces latérales du connecteur en queue d'aronde (70) correspondant ; et les dispositifs d'entraînement à l'intérieur des coulisseaux (431) entraînent les engrenages (435) à tourner sur les crémaillères, entraînant ainsi l'ensemble des élévateurs d'éolienne (43) correspondants à monter sur les pieds de support (41).

**7.** Système intégré de pré-assemblage et de déchargement horizontal pour éoliennes marines (10) selon la revendication 1, **caractérisé en ce que** une pluralité d'élévateurs d'éolienne (43) sont disposés dans chaque dispositif de levage (40) ; des dispositifs de stockage rotatifs (50) sont installés sur des extrémités supérieure et inférieurs de chaque pied de support (41), les dispositifs de stockage rotatifs (50) sur chaque pied de support (41) sont disposés de manière coaxiale avec le pied de support (41) et capables de tourner autour d'un axe central ; chaque dispositif de stockage rotatif (50) est pourvu d'une pluralité de deuxièmes rails (51) dans une direction circonférentielle, le nombre des deuxièmes rails (51) est égal à celui des élévateurs d'éolienne (43), et les deuxièmes rails ont une même structure que les premiers rails et sont capables de venir en butée avec les premiers rails ; et les élévateurs d'éolienne (43) sont capables de se déplacer sur les deuxièmes rails (51).

**8.** Système intégré de pré-assemblage et de déchargement horizontal pour éoliennes marines (10) selon la revendication 7, **caractérisé en ce que** chaque dispositif de stockage rotatif (50) est pourvu de manière uniforme des connecteurs en queue d'aronde (70) dont le nombre est égal à celui des élévateurs d'éolienne (43) dans la direction circonférentielle, deux faces latérales de chaque connecteur en queue d'aronde (70) sont pourvues des crémaillères verticales qui forment ensemble le deuxième rail (51) correspondant.

**9.** Système intégré de pré-assemblage et de déchargement horizontal pour éoliennes marines (10) selon la revendication 7, **caractérisé en ce que** les dispositifs de stockage rotatifs (50) aux extrémités inférieures des pieds de support (41) sont disposées au-dessous du pont du navire d'installation d'éolienne (30), et le connecteur entre le pont et chaque pied de support (41) est pourvu d'une ouverture de pont.

**10.** Système intégré de pré-assemblage et de déchargement horizontal pour éoliennes marines (10) selon la revendication 1, **caractérisé en ce que** les pinces de fixation (433) sont en forme d'arc, et des patins antidérapants sont prévus sur les surfaces internes des pinces de fixation (433).

**11.** Système intégré de pré-assemblage et de déchargement horizontal pour éoliennes marines (10) selon la revendication 1, **caractérisé en ce que** des hélices (434) sont installées sur les poutres en porte-à-faux (432), sont situées entre les coulisseaux (431) et les pinces de fixation (433), et sont capables de pousser les pinces de fixation (433) à se déplacer dans la direction horizontale.

**12.** Système intégré de pré-assemblage et de déchargement horizontal pour éoliennes marines (10) selon la revendication 1, **caractérisé en ce que** les dispositifs de levage (40) comprennent en outre des manchons (42) gainant les périphéries des pieds de support (41), les manchons (42) sont pourvus chacun sur un côté d'ouvertures verticales, les poutres en porte-à-faux (432) des élévateurs d'éolienne (43) s'étendent en saillie des ouvertures verticales des manchons (42) et les manchons (42) sont utilisés pour renforcer et protéger le pieds de support (41).

**13.** Système intégré de pré-assemblage et de déchargement horizontal pour éoliennes marines (10) selon la revendication 1, **caractérisé en ce qu'**un système de réglage de l'eau de ballast est disposé dans le navire d'installation d'éolienne (30).

**14.** Système intégré de pré-assemblage et de déchargement horizontal pour éoliennes marines (10) selon la revendication 1, **caractérisé en ce que** la proue du navire d'installation d'éolienne (30) est reliée au quai par l'intermédiaire d'un tremplin (60).

**15.** Procédé intégré de pré-assemblage et de déchargement horizontal pour éoliennes marines (10), dans lequel le procédé utilise le système de déchargement selon l'une quelconque des revendications 1 à 14, et est mis en œuvre selon les étapes suivantes :

étape 1 : effectuer un assemblage horizontal des différentes sections (11, 12, 13, 14) d'une éolienne (10) en déplaçant de manière relative des transporteurs modulaires autopropulsés (20) dans la direction horizontale, dans lequel l'un des transporteurs reste dans sa position, et les autres transporteurs se déplacent les uns par rapport aux autres le long du même axe horizontal de sorte de mettre en œuvre un aboutement et un assemblage des différents sections (11, 12, 13, 14) de l'éolienne (10) ;

étape 2 : les transporteurs modulaires autopropulsés (20) chargés de l'éolienne intégrée (10) se déplaçant stablement à une basse vitesse pour mettre en œuvre un processus de déchargement de l'éolienne intégrée (10) depuis un site vers le navire d'installation d'éolienne (30) ;

étape 3 : une fois le processus de déchargement complète, les transporteurs (20) se déplaçant vers une position de levage, les élévateurs d'éolienne (43) des dispositifs de levage (40) montant à la même hauteur que les transporteurs modulaires autopropulsés (20), les pinces de fixation (433) maintenant l'éolienne intégrée (10) et montant vers une position désignée, complétant ainsi le processus de déchargement d'une éolienne (10), puis les transporteurs modulaires autopropulsés (20) quittant le pont et revenant au site ; et

étape 4, décharger plusieurs éoliennes successivement sur le navire de la même manière que décrit ci-dessus pour terminer le processus de déchargement pour un itinéraire du navire d'installation d'éolienne (30).

20

22

23

21

Fig. 1

Fig. 2

Fig. 3

Fig. 4

Fig. 5

Fig. 6

Fig. 7

Fig. 8

Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014310958 A1
- KR 20160121201 A